# EUROPEAN PATENT APPLICATION

(11) **EP 3 968 224 A1**
(43) Date of publication of application: **16.03.2022**
(21) Application number: 21169399.9
(22) Date of filing: 20.04.2021
(51) Int. Cl.: G06K 9/62, G06K 9/00

(54) **METHOD AND APPARATUS FOR BUILDING EXTRACTION, DEVICE AND STORAGE MEDIUM**

(30) Priority: 11.09.2020 CN 202010952905
(71) Applicant: Beijing Baidu Netcom Science and Technology Co., Ltd., Beijing 100085 (CN)
(72) Inventor: PENG, Jidong, Beijing, 100085 (CN); WAN, Cheng, Beijing, 100085 (CN); CHEN, Cheng, Beijing, 100085 (CN); WEN, Shilei, Beijing, 100085 (CN); SUN, Ke, Beijing, 100085 (CN); LUO, Chengliang, Beijing, 100085 (CN)
(74) Representative: advotec.

(57) **Abstract**

A method, an apparatus, a device for building extraction and a storage medium are provided in the present disclosure, which relates to a field of image processing technology, and the specific implementation plan is: obtaining remote sensing image data and user behavior associated data of a target area; wherein the user behavior associated data and the remote sensing image data have a spatiotemporal correlation; generating new channel data according to the user behavior associated data and the remote sensing image data; and extracting buildings in the target area according to the remote sensing image data and the new channel data. The accuracy of the building exaction is provided in the embodiments of the present disclosure.

## Description

### TECHNICAL FIELD

The present disclosure relates to a field of image processing technology, and particularly to a method and apparatus for building extraction, a device and a storage medium.

### BACKGROUND

Buildings refer to spaces like residences, commercial buildings and office buildings that can provide people with functions such as residence, entertainment, work, or storage. As one of the main factors in the basic geographic database, buildings are of great importance in the fields of urban planning and construction, urbanization assessment, population density estimation, and post-disaster reconstruction.

Because buildings change frequently, it is necessary to update conditions of buildings in the basic geographic database in a timely manner. However, in the related art, when extracting a building, it is usually affected by factors such as the environment, which results in poor extraction accuracy of the building, and cannot meet the usage requirements.

### SUMMARY

A method and an apparatus for building extraction, a device and a storage medium with a high accuracy are provided in the present disclosure.

According to a first aspect of the present disclosure, there is provided a method for building extraction, including: obtaining remote sensing image data and user behavior associated data of a target area, in which the user behavior associated data and the remote sensing image data have a spatiotemporal correlation; generating new channel data according to the user behavior associated data and the remote sensing image data; and extracting a building in the target area according to the remote sensing image data and the new channel data.

In some embodiments, generating the new channel data according to the user behavior associated data and the remote sensing image data may include: mapping the user behavior associated data to pixels of the remote sensing image data according to location information, and generating the new channel data according to the user behavior associated data associated with the respective pixels.

In some embodiments, the user behavior associated data comprise at least one of points of interest (POI) data, location data, and search data.

In some embodiments, when the user behavior associated data comprise the POI data, mapping the user behavior associated data to pixels of the remote sensing image data according to location information, and generating the new channel data according to the user behavior associated data associated with the respective pixels may include: determining neighboring POIs of the respective pixels in the remote sensing image data according to location information of respective candidate POIs in the POI data; and generating the new channel data according to POI data of the neighboring POIs.

In some embodiments, generating the new channel data according to POI data of the neighboring POIs may include: for each pixel, generating a POI topic vector according to text data of the neighboring POIs, and generating the new channel data according to POI topic vectors of respective pixels; or, performing statistics on the neighboring POIs of the respective pixels, and generating the new channel data according to a statistical result.

In some embodiments, when the user behavior associated data comprise the location data, mapping the user behavior associated data to pixels of the remote sensing image data according to location information, and generating the new channel data according to the user behavior associated data associated with the respective pixels may include: determining resident categories of location points associated with the respective pixels according to a distribution condition of the respective location points in the location data, in which, the resident categories comprise a permanent category and a non-permanent category; and generating the new channel data according to the resident categories associated with the respective pixels.

In some embodiments, generating the new channel data according to the resident categories associated with the respective pixels may include: performing statistics on the location points associated with the respective pixels according to the resident categories, and generating the new channel data according to a statistical result.

In some embodiments, when the user behavior associated data comprise the location data, mapping the user behavior associated data to pixels of the remote sensing image data according to location information, and generating the new channel data according to the user behavior associated data associated with the respective pixels may include: determining location data associated with the respective pixels of the remote sensing image data according to the distribution of each location point in the location data; and performing statistics on at least one of the number of location points and the number of location users in the location data associated with the respective pixels, and generating the new channel data according to a statistical result.

In some embodiments, when the user behavior associated data comprise the search data, mapping the user behavior associated data to pixels of the remote sensing image data according to location information, and generating the new channel data according to the user behavior associated data associated with the respective pixels may include: determining a searching time of keyword combinations associated with the respective pixels of the remote sensing image data according to the location information of the search data; and generating the new channel data according to searching times associated with the respective pixels.

In some embodiments, extracting the building in the target area according to the remote sensing image data and the new channel data may include: inputting the remote sensing image data and the new channel data to a pre-trained building extraction model, and extracting the building in the target area.

According to another aspect of the present disclosure, there is provided an apparatus for building extraction, including: a data obtaining module, configured to obtain remote sensing image data and user behavior associated data of a target area, wherein the user behavior associated data and the remote sensing image data have a spatiotemporal correlation; a new channel data generating module, configured to generate new channel data according to the user behavior associated data and the remote sensing image data; and a building exaction module, configured to extract a building in the target area according to the remote sensing image data and the new channel data.

In some embodiments, the new channel data generating module may include: a pixel mapping unit, configured to map the user behavior associated data to pixels of the remote sensing image data according to location information, and generate the new channel data according to the user behavior associated data associated with the respective pixels.

In some embodiments, the user behavior associated data may include at least one of points of interest (POI) data, location data, and search data, and when the user behavior associated data comprise the POI data, the pixel mapping unit may include: a neighboring POI determining subunit, configured to determine neighboring POIs of each the respective pixels in the remote sensing image data according to the location information of each respective candidate POIs in the POI data; and a new channel data generating subunit, configured to generate the new channel data according to POI data of the neighboring POIs.

According to another aspect of the present disclosure, there is provided an electronic device, including: at least a processor, and a memory connected with at least one processor communication; in which, the memory configured to store instructions executable by at least one processor, and when the instructions are executed by at least one processor, the at least one processor are configured to execute the method of any embodiment in the present disclosure.

According to another aspect of the present disclosure, a non-transitory computer-readable storage medium having computer instructions stored thereon, in which the computer instructions are configured to execute the method of any embodiment in the present disclosure.

The technical solution in the embodiments of the present disclosure improves the accuracy of building exaction.

It should be understood that the content in this part is not intended to identify key or important features of the embodiments of the present disclosure, and is not restrictive of the scope of the present disclosure. Other features of the present disclosure will be easily understood through the following specification.

### BRIEF DESCRIPTION OF THE DRAWINGS

The drawings are used to better understand the solution, and are not restrictive of the disclosure, in which:
FIG. 1 is a flow chart illustrating a method for building extraction according to an exemplary embodiment;
FIG. 2 is a flow chart illustrating a method for building extraction according to another exemplary embodiment;
FIG. 3 is a flow chart illustrating a method for building extraction according to another exemplary embodiment;
FIG. 4 is a flow chart illustrating a method for building extraction according to another exemplary embodiment;
FIG. 5 is a flow chart illustrating a method for building extraction according to another exemplary embodiment;
FIG. 6 is a flow chart illustrating a method for building extraction according to another exemplary embodiment;
FIG. 7 is a schematic diagram illustrating an apparatus for building extraction according to an exemplary embodiment;
FIG. 8 is a block diagram illustrating an electronic device for implementing the building extraction method in embodiments of the present disclosure.

### DETAILED DESCRIPTION

The following describes exemplary embodiments of the present disclosure with reference to the attached drawings, which include various details of the embodiments of the present disclosure to facilitate understanding, and they should be considered as merely exemplary. Therefore, those skilled in the art will realize that various changes and modifications can be made to the embodiments described herein without departing from the scope and spirit of the present disclosure. Similarly, for clarity and conciseness, descriptions of well-known functions and structures are omitted in the following description.

The method and apparatus for building extraction provided in the embodiments of the present disclosure are suitable for project implementation process, such as smart city construction, urbanization assessment, population density estimation, and post-disaster reconstruction. The intelligent translation performed by the image processing technology through remote sensing image data may realize the situation of building extraction. The building extraction method provided in the embodiments of the present disclosure can be executed by a building extraction apparatus, which is implemented by software and/or hardware, and is specifically configured in an electronic device.

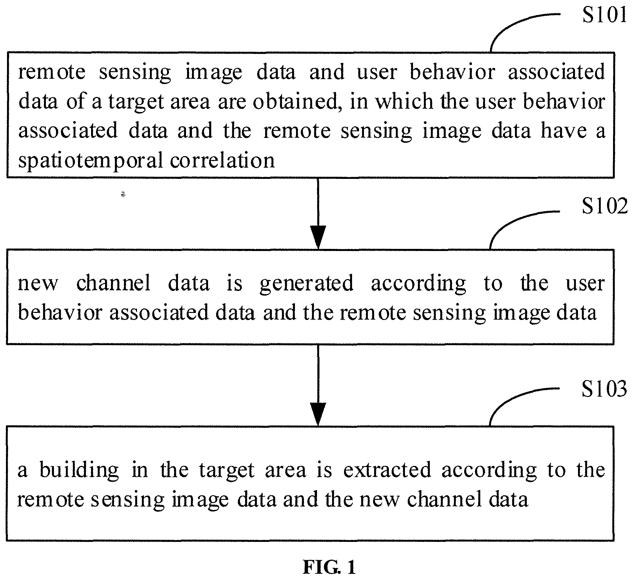

FIG. 1 is a flow chart illustrating a method for building extraction according to an exemplary embodiment, and the method includes followings.

At block S101, remote sensing image data and user behavior associated data of a target area are obtained, in which the user behavior associated data and the remote sensing image data have a spatiotemporal correlation.

The user behavior associated data and the remote sensing image data have a spatiotemporal correlation. Exemplarily, remote sensing image data can be understood as image data recording electromagnetic wave size of the ground object in the target area. Each pixel in the remote sensing image data characterizes a subarea in the target area.

Exemplarily, user behavior associated data are configured to characterize auxiliary data that has a temporal and spatial relationship with the remote sensing image data and can reflect user behavior.

The temporal relationship can be limited by the collection time of the user behavior associated data and the remote sensing images. Exemplarily, the user behavior associated data may be auxiliary data collected or used in a set historical period before the remote sensing image data is collected, in which the set historical period can be determined by a technician according to needs or empirical value, or determined by a lot of trial and error. For example, the set historical period may be the auxiliary data collected or used 60 days before the time when the remote sensing image data is collected.

The spatial relationship can be limited by the collection location of the auxiliary data and the remote sensing images. Specifically, the user behavior associated data may be the auxiliary data collected or used by each subarea in the target area.

In an embodiment, the user behavior associated data may be at least one of POI (Point of Interest) data, location data, search data, etc., which enriches the content categories contained in the user behavior associated data, thereby providing a possibility of generating various types of new channel data.

Exemplarily, the POI data is configured to characterize the associated data of the respective candidate POIs in the target area. For example, it may be the category or description information of a candidate POI, etc., which reflects the user's activity in respective candidate POIs.

Exemplarily, the location data may be the coordinate information and the like collected at the time when a user in the target area use an application with location function, which can reflect the location behavior in different subareas in the target area.

Exemplarily, the search data may be the search information and the like collected at the time when a user in the target area use an application with location function, which can reflect the search behavior in different subareas in the target area.

Optionally, at least one of the remote sensing image data and the user behavior associated data can be pre-stored locally in the electronic device, other storage devices or the cloud associated with the electronic device. Correspondingly, when a building needs to be extracted, the remote sensing image data and the user behavior associated data can be obtained respectively in the corresponding storage space.

At block S102, new channel data is generated according to the user behavior associated data and the remote sensing image data.

Exemplarily, according to the remote sensing image data, the user behavior associated data are processed to obtain the new channel data that have a spatiotemporal correlation with the remote sensing image data. Optionally, the processing of the user behavior associated data may be at least one of splitting, combination, feature extraction and other data transformations.

Optionally, the user behavior associated data can be split according to the location information of respective pixels in the remote sensing image data, and the split user behavior associated data can be recombined according to the order of respective pixels in the remote sensing image data, so as to generate new channel data based on the user behavior associated data associated with respective pixels.

Optionally, a machine learning model can also be used to extract collaborative features associated with the remote sensing image data from user behavior associated data, and generate new channel data based on the extracted collaborative features. The machine learning model may adopt any existing model or a combination of at least two models, and the specific structure of the model is not limited in the present disclosure.

In an embodiment, generating new channel data according to the user behavior associated data and the remote sensing image data includes: mapping the user behavior associated data to pixels of remote sensing image data according to the location information, and generating new channel data according to the user behavior associated data associated with each pixel. It is to be understood that the establishment of the association relationship between the remote sensing image data and the user behavior associated data through data mapping lays the foundation for the generation of new channel data. At the same time, the data mapping method is simple and quick to operate, has strong operability, and has a small amount of data calculation.

Specifically, because the respective pixels in the remote sensing image data corresponds to a subarea in the target area, the user behavior associated data can be mapped into the corresponding pixel according to the location information of the subarea in the target area corresponding to the pixel and the location information of respective data in the user behavior associated data. Therefore, the association relationship between each pixel and user behavior associated data can be established. Furthermore, the new channel data are generated according to the user behavior associated data associated with the respective pixels, which is used to assist the building exaction in the target area.

At block S103, a building in the target area is extracted according to the remote sensing image data and the new channel data.

The remote sensing image data may include data of at least one channel type, in which, the channel type may be at least one of RGB type or infrared type.

Exemplarily, additional channels can be set in the remote sensing image data, in which the number of additional channels is the same as the number of channels of the newly added channel data; the new channel data are added to the remote sensing image data according to the channel to update the remote sensing image data; buildings in the target area are extracted according to the updated remote sensing image data.

It is to be understood that the new channel data generated by the user behavior associated data and the remote sensing image data assist the building exaction in the target area, and make up for the low accuracy of the building exaction result caused by the poor quality of the remote sensing image data due to the collection environment and other factors. At the same time, new channel data are introduced in the building extraction process, which enriches reference data for building extraction, thereby improving the accuracy of building extraction result.

With the embodiments of the present disclosure, remote sensing image data and user behavior associated data of a target area are obtained, in which the user behavior associated data and the remote sensing image data have a spatiotemporal correlation, new channel data may be generated according to the user behavior associated data and the remote sensing image data, and a building in the target area may be extracted according to the remote sensing image data and the new channel data. The embodiments of the present disclosure introduce new channel data generated by the user behavior associated data and the remote sensing image data to characterize the user's activity in different locations in the target area, and use the new channel data as supplementary data for the remote sensing image data, which enriches the data reference in the process of building extraction, thereby improving the accuracy of building extraction result. At the same time, the new channel data can also make up for the influence on the building extraction result caused by the poor quality of the remote sensing image data due to the collection environment and other factors, thereby improving the stability of the building extraction result and the generality of the building extraction method.

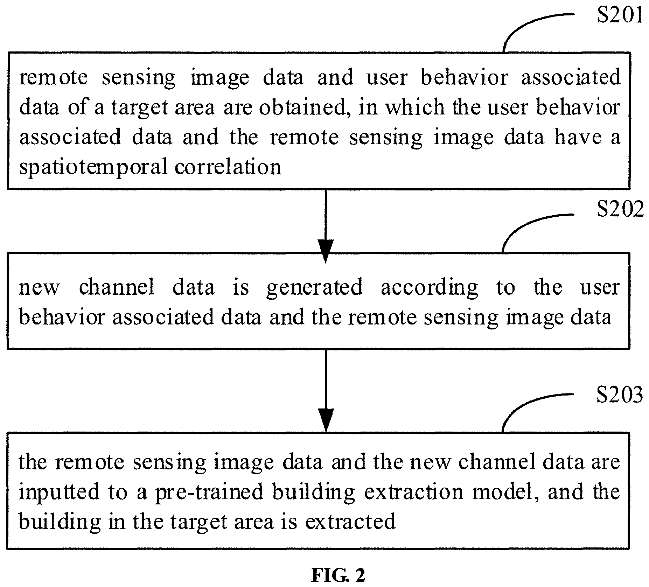

FIG. 2 is a flow chart illustrating another method for building extraction according to an exemplary embodiment. The method is optimized and improved on the basis of the above technical solutions.

Further, the operation "extracting a building in the target area according to the remote sensing image data and the new channel data" is refined to "inputting the remote sensing image data and the new channel data to a pre-trained building extraction model, and extracting the building in the target area" to complete the method for building exaction.

The method for building extraction as illustrated in FIG. 2 includes followings.

At block S201, remote sensing image data and user behavior associated data of a target area are obtained, in which the user behavior associated data and the remote sensing image data have a spatiotemporal correlation.

At block S202, new channel data is generated according to the user behavior associated data and the remote sensing image data.

At block S203, a building in the target area is extracted according to the remote sensing image data and the new channel data.

At block S204, the remote sensing image data and the new channel data are inputted to a pre-trained building extraction model, and the building in the target area is extracted.

Optionally, buildings in the target area may be extracted by detecting buildings in the target area. Optionally, buildings in the target area may be extracted by performing semantic segmentation to buildings in the target area.

In the model training phase of the building extraction model, pre-marked remote sensing image data and new channel data of the building are used to adjust the network parameter of the building exaction model that is constructed until the need of the accuracy of the building exaction model is satisfied.

Exemplarily, building extraction model may include at least one of an object detection model and a semantic segmentation model. The object detection mode is used to detect buildings in the target area, which is implemented based on at least one of PP-YOLO (PaddlePaddle You only look once) and Mask R-CNN (Mask Region Convolutional Neural Networks), and other network structures. The semantic segmentation model is used to perform semantic segmentation to buildings in the target area, which is implemented based on U-net, DeepLab and other network structures.

The embodiments of the present disclosure introduce the building extraction model in the process of extracting buildings in the target area, which improves the generality and the convenience of building extraction, and also improves the efficiency of building extraction. Buildings in the target area can be extracted based on the remote sensing image data and the new channel data.

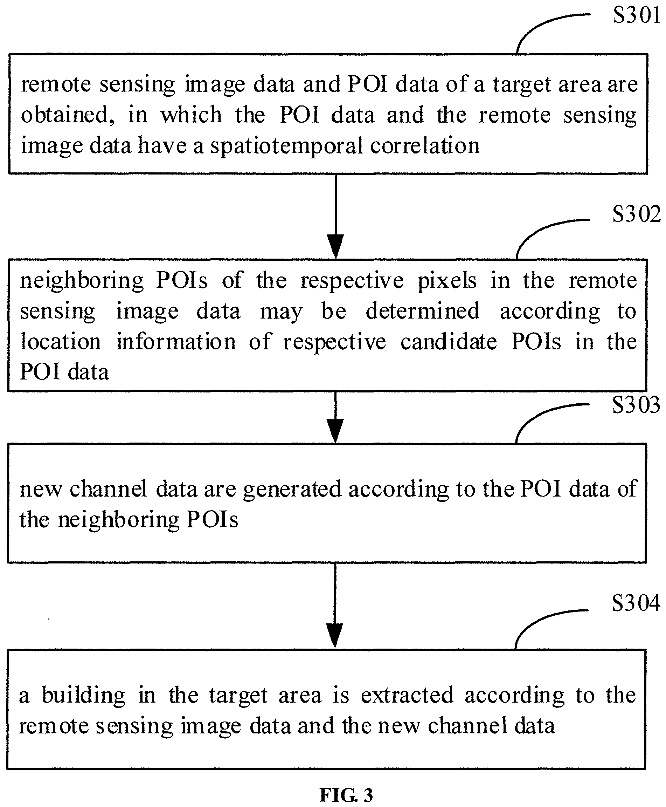

FIG. 3 is a flow chart illustrating another method for building extraction according to an exemplary embodiment. The method is optimized and improved on the basis of the technical solutions in the above embodiments.

Further, the user behavior associated data are refined to including POI data, correspondingly, the operation "generating the new channel data according to the user behavior associated data associated with the respective pixels" is refined to "determining neighboring POIs of the respective pixels in the remote sensing image data according to location information of respective candidate POIs in the POI data; and generating the new channel data according to POI data of the neighboring POIs" to improve the determination mechanism of the new channel data.

A building exaction method as illustrated in FIG. 3 includes followings.

At block S301, remote sensing image data and POI data of a target area are obtained, in which the POI data and the remote sensing image data have a spatiotemporal correlation.

The POI data may be associated data of each candidate POI corresponding to the target area in the used map data at the time when the user uses an application with a navigation function or a map query function. For example, it may include the category or description information of the candidate POI.

It should be noted that since the POI data corresponding to the candidate POIs are different, correspondingly, the operations that the user can perform in each candidate POI are also different, that is, the user's activities in different candidate POIs are different. Therefore, POI data can be introduced to partly reflect the user's activities in each candidate POI.

The POI data may include at least one of data such as location information and text information. The location information is used to characterize the location coordinate corresponding to the present POI; the text information is used to characterize basic attributes such as profile description of the present POI and POI category.

Since the POI data may be adjusted according to the addition or deletion of candidate POIs, in order to ensure the real-time and validity of the POI data, the obtained POI data are often the POI data within a set period of time before the remote sensing image data are collected. The set period of time can be set by technicians according to needs or empirical value, or may be determined through a large number of experiments.

At block S302, neighboring POIs of the respective pixels in the remote sensing image data may be determined according to location information of respective candidate POIs in the POI data.

Exemplarily, according to the location information of respective candidate POIs in the POI data, the POI data are respectively mapped to respective pixels of the remote sensing image data, so as to establish the association relationship between pixel and POI data, and candidate POIs associated with respective pixels are regarded as neighboring POIs.

At block S303, new channel data are generated according to the POI data of the neighboring POIs.

In an optional embodiment, generating the new channel data according to POI data of the neighboring POIs includes: for each pixel, generating a POI topic vector according to text data of the neighboring POIs, and generating the new channel data according to POI topic vectors of respective pixels.

The text data of POI include at least one of POI name, POI description, geographic location and other information.

The POI topic vector is used to characterize the feature vector of the functional topic or the location topic of the POI, which can be extracted from the text data of the POI.

Exemplarily, word segmentation processing can be performed on the text data of the POI to obtain the word segmentation result; the word segmentation result is input into the pre-trained topic generating model to obtain the POI topic vector. The document topic generating model can be an LDA (Latent Dirichlet Allocation) model, etc., which can divide POI words into a plurality of topics.

In order to reduce the amount of data calculation in the process of determining the POI topic vector, thereby improving the efficiency of determining the POI topic vector, a POI topic vector set can also be pre-set, and POI topic vectors corresponding to text data of each candidate POIs are stored in the POI topic vector set. Correspondingly, text data of neighboring POIs are matched with text data of each candidate POI, and the POI topic vector of the candidate POI with a higher matching degree is determined to be the POI topic vector of the neighboring POI.

The POI topic set may be constructed in the following method: extracting the POI name of each candidate POI from the preset POI database to obtain the word segmentation result of the POI name, for example, the extraction to the POI name may be based on at least one of Chinese thesaurus and foreign language thesaurus. Then the word segmentation result of the name of the POI is input into the document topic generating model to obtain the POI topic set, and the corresponding relationships between each candidate POI in the POI topic set and the POI topic vector are established. The document topic generating model can be an LDA (Latent Dirichlet Allocation) model, etc., which can divide POI words into a plurality of topics.

In another alternative embodiment, generating the new channel data according to POI data of the neighboring POIs includes: performing statistics on the neighboring POIs of the respective pixels, and generating the new channel data according to a statistical result.

Optionally, performing statistics on the neighboring POIs of the respective pixels, and generating the new channel data according to a statistical result include: for each pixel, statistics is performed on the neighboring POIs of the pixel; and combining the number of POIs of neighboring POIs of the pixel to generate the new channel data according to the order of the pixel in the remote sensing image data.

Optionally, performing statistics on the neighboring POIs of the respective pixels, and generating the new channel data according to a statistical result include: for each pixel, statistics may be performed on POI categories of neighboring POIs of the pixel; the number of POIs of neighboring POIs of the respective pixels may be combined to generate new channel data according to the order of the respective pixels in the remote sensing image data. The POI category can be determined by technicians according to needs or experience. Exemplarily, categories of POIs may adopt industry classification standards, and POIs can be classified into at least one primary industry classification of food, hotel, shopping, life service, tourist attraction, and leisure and entertainment. In order to further increase the content richness in the new channel data, the results of each primary industry classification can also be further divided into at least one secondary industry classification. For example, hotels are divided into star hotels, express hotels, apartment hotels, and homestays.

Optionally, performing statistics on the neighboring POIs of the respective pixels, and generating the new channel data according to a statistical result includes: for each pixel, statistics may be performed on the number of POIs of neighboring POIs of the pixel under each POI category; for each POI category, the number of POIs of each pixel may be combined to generate new channel data corresponding to the POI category according to the order of each pixel in the remote sensing image data.

It should be noted that when generating new channel data based on the statistical result, in order to eliminate the influence of dimensions of different channel data, the statistical result can also be normalized, and new channel data are generated based on the normalized statistical result. The normalization process may use one of linear function normalization, zero mean normalization, and other existing normalization methods, or a combination of at least two methods.

It should be noted that, in order to eliminate images caused by different dimensions of each channel data in the new channel data and the remote sensing image data, the new channel data can be normalized to the data range [0, 255] during the normalization process.

At block S304, a building in the target area is extracted according to the remote sensing image data and the new channel data.

In the embodiments of the present disclosure, the operation of generating the new channel data is refined to an operation of determining neighboring POIs in the respective pixels in remote sensing image data based on the location information of the respective candidate POIs in POI data; new channel data are generated based on the POI data of neighboring POIs. The above technical solution is used to improve the generation mechanism of the new channel data, and to dig hidden features related to user's activities and behaviors through POI data, thereby enriching the reference basis for building extraction and laying the foundation for the improvement of the accuracy of building extraction result.

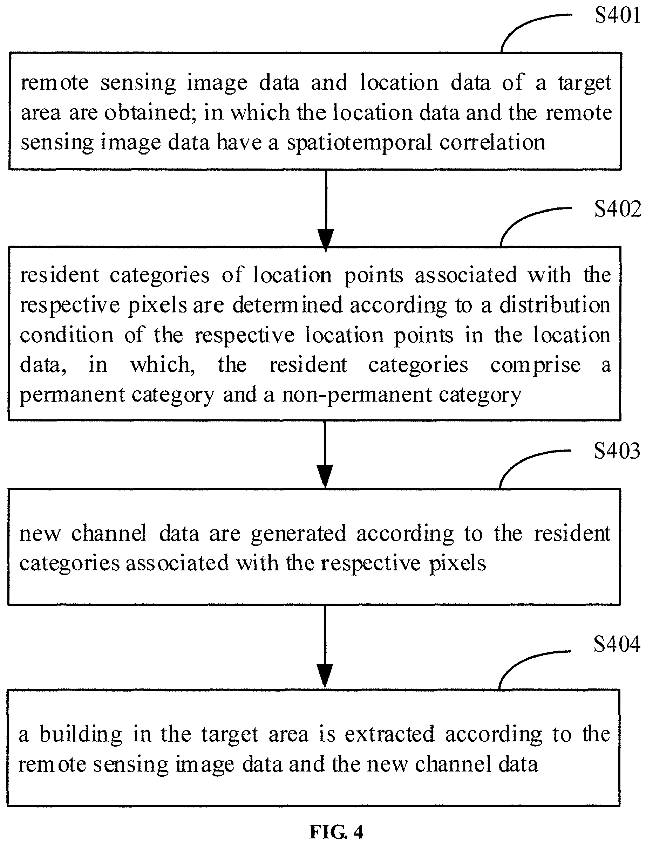

FIG. 4 is a flow chart illustrating another method for building extraction according to an exemplary embodiment. The method is optimized and improved on the basis of the technical solutions in the above embodiments.

Further, the user behavior associated data are refined to including location data, correspondingly, the operation "generating the new channel data according to the user behavior associated data and the remote sensing image data" is refined to "
determining resident categories of location points associated with the respective pixels according to a distribution condition of the respective location points in the location data, in which, the resident categories comprise a permanent category and a non-permanent category; and generating the new channel data according to the resident categories associated with the respective pixels" to complete the determination mechanism of the new channel data.

The method for building extraction as illustrated in FIG. 4 includes followings.

At block S401, remote sensing image data and location data of a target area are obtained; in which the location data and the remote sensing image data have a spatiotemporal correlation.

The location data may be generated by a user in the target area using an application with a location function. Therefore, the location data can characterize the location behavior of the user or the using behavior of the application with a location function.

It is to be noted that the location behavior may be a location behavior that is actively triggered by the user, for example, locating the location of the user through a navigation application. Optionally, the location behavior may also be the location behavior that is passively triggered by the user. For example, when the user uses a shopping application to browse products, the shopping application collects the user's location according to the authorization of the application.

Exemplarily, the location data may be the data collected within a set historical time period before the remote sensing image data collection time, which reflects the time correlation between the location data and the remote sensing image data, and meanwhile ensures the timeliness of the location data. The set historical time period can be determined by technicians according to needs or experience, or repeatedly determined through a large number of experiments.

Exemplarily, the location data may be the data generated by the user in the target area, thereby reflecting the spatial association between the location data and the remote sensing image data, and laying a foundation for the generation of candidate new channel data.

At block S402, resident categories of location points associated with the respective pixels are determined according to a distribution condition of the respective location points in the location data, in which, the resident categories comprise a permanent category and a non-permanent category.

Exemplarily, the target area is divided into different subareas according to the location information of the respective pixels; the location users of each location point in the subarea are determined respectively according to the location time sequence of the location points of each location user in the location data, in which, movement features include at least one of a movement speed and a stay time; the location points are determined to be a permanent category or a non-permanent category according to the movement features of the location users.

Optionally, for each location user, the movement speed of the location user at one of the location points of the neighboring location points is determined according to the neighboring location time of the location point of the location user and the location distance corresponding to the neighboring location time; when the movement speed is less than the set speed threshold, the location point is determined to be a permanent category; when the movement speed is not less than the set speed threshold, the location point is determined to be a non-permanent category. The speed threshold can be determined by technicians according to needs or experience, or repeatedly determined through a large number of experiments.

Optionally, for each location user, the movement speed of the location user at one of the location points of the neighboring location points is determined according to the neighboring location time of the location point of the location user and the location distance corresponding to the neighboring location time; when the movement speeds of the set number of consecutive location points in the neighboring location time are all less than the set speed threshold, the resident categories of the set number of consecutive location points are determined to be the permanent category, otherwise, the resident categories of the set number of consecutive location points are determined to be the non-permanent category. At least one of the set quantity and the speed threshold can be determined by technicians according to needs or experience, or repeatedly determined through a large number of experiments.

At block S403, new channel data are generated according to the resident categories associated with the respective pixels.

In an embodiment, generating the channel data according to the resident categories associated with the respective pixels includes: performing statistics on the location points associated with the respective pixels according to the resident categories, and generating the new channel data according to a statistical result. It is to be understood that the generation of new channel data through the method of resident category statistics further improves the generation method of new channel data. At the same time, data support is provided for the generation of new channel data through statistics, which is simple and quick to operate and small in memory resource usage.

Exemplarily, for each resident category, statistics is performed respectively on the statistical values of the location points associated with each pixel under each resident category; according to the order of the respective pixels in the remote sensing image data, the statistical values of each pixel under each resident category are combined to generate new channel data corresponding to the resident category. It is to be noted that the number of channels of new channel data can be determined according to the number of resident categories. Typically, the number of resident categories is equal to the number of channels of new channel data.

It should be understood that, in order to eliminate the influence of the dimensions of the statistical values of different resident categories, the statistical values can also be normalized, and the new channel data can be generated based on the normalized statistical values. The normalization process may adopt one of linear function normalization, zero-mean normalization, and other existing normalization methods, or a combination of at least two methods.

It should be noted that, in order to eliminate images caused by different dimensions of each channel data in the new channel data and the remote sensing image data, the new channel data can be normalized to the data range [0, 255] during the normalization process.

Exemplarily, the statistical values of the location points associated with each pixel under the resident category are respectively counted; the resident category ratio can be determined according to the ratio of the statistical value of the resident category to the total number of location points associated with corresponding pixel; the statistical values of each pixel under each resident category are combined to generate new channel data corresponding to the resident category according to the order of each pixel in the remote sensing image data,.

At block S404, a building in the target area is extracted according to the remote sensing image data and the new channel data.

In the embodiments of the present disclosure, the operation of generating the new channel data is refined to determining resident categories of location points associated with the respective pixels according to the distribution of the respective location points in the location data; in which, the resident categories include a permanent category and a non-permanent category; generate new channel data according to the resident category associated with the respective pixels. Adopting the above technical solutions, the generation mechanism for new channel data is improved, and the location points are distinguished by introducing the resident categories, and user's activity in the area it locates is mapped, so as to perform generation of the new channel data according to the resident category, so that the generated new channel data includes implied features associated with user's activities. Therefore, in the building extraction process, supplementing the remote sensing image data enriches the reference for building extraction and lays the foundation of the improvement of the accuracy of the extraction result.

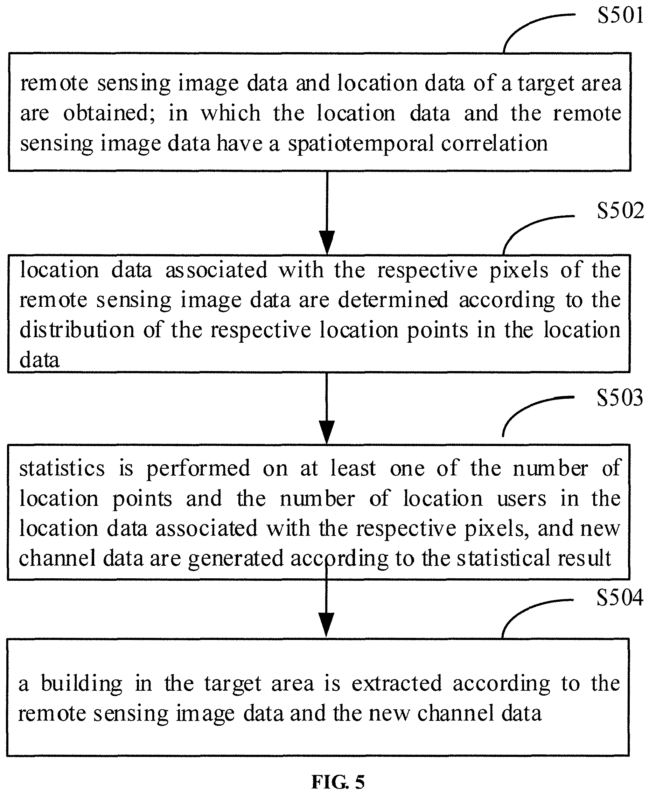

FIG. 5 is a flow chart illustrating another method for building extraction according to an exemplary embodiment. The method is optimized and improved on the basis of the technical solutions in the above embodiments.

Further, the user behavior associated data are defined to the data including location data, correspondingly, the operation "generating the new channel data according to the user behavior associated data and the remote sensing image data" is defined to "determining the location data associated with the respective pixels of the remote sensing image data according to the distribution of the respective location points in the location data; performing statistics on at least one of the number of location points and the number of location users in the location data associated with the respective pixels, and generating the new channel data according to a statistical result" to improve the determination mechanism of the new channel data.

The method for building exaction as illustrated in FIG. 5 includes followings.

At block S501, remote sensing image data and location data of a target area are obtained; in which the location data and the remote sensing image data have a spatiotemporal correlation.

The location data include the location information of the respective location points and the user information of the location user corresponding to the respective location points.

At block S502, location data associated with the respective pixels of the remote sensing image data are determined according to the distribution of the respective location points in the location data.

Exemplarily, location data associated with each pixel are obtained by mapping the location data to the location area of the respective pixels in the remote sensing image data according to the distribution of the respective location points in the location data.

At block S503, statistics is performed on at least one of the number of location points and the number of location users in the location data associated with the respective pixels, and new channel data are generated according to the statistical result.

Optionally, generating new channel data according to the statistical result obtained by performing statistics on the number of location points in the location data associated with the respective pixels includes: obtaining statistical values of location points by directly performing statistics on the number of the location points in the location data associated with the respective pixels; and generating new channel data under the location point dimension by combining the statistical values of the location points associated with the respective pixels according to the order of the respective pixels in the remote sensing image data.

Optionally, generating new channel data according to the statistical result by performing statistics on the number of location users in the location data associated with each pixel includes: obtaining the user statistical value by performing statistics on the number of location users in the location data associated with each pixel; and generating new channel data under the user dimension by combining the statistical values associated with the respective pixels according to the order of the respective pixels in the remote sensing image data.

Optionally, generating new channel data according to the statistical result by performing statistics on the number of location users in the location data associated with each pixel includes: determining the location users in the location data associated with the respective pixels; obtaining the statistical values of user categories by determining user categories of the respective location users, and performing statistics on the user categories of the location users associated with the respective pixels; for each user category, generating new channel data under the user category dimension by combining the statistical values of the user categories according to the order of the respective pixels in the remote sensing image data. The number of channels of new channel data corresponds to the number of user categories.

Further, in order to enrich the amount of information of the new channel data, the statistical values under different dimensions (at least one of location point dimension, user dimension, user category dimension, etc.) in different time can also be determined in different time and new channel data for corresponding channel can be generated according to the statistical values. The number of channels of the new channel data corresponds to the product of the number of time periods and the number of dimensions. The time division method can be determined by technicians according to needs or experience, for example, a day can be divided into two time periods, day and night, etc.

It is to be noted that, in order to enrich the amount of information of the new channel data, at least two kinds of the above new channel data can be used to combine with and obtain multi-channel new channel data so as to provide data support for subsequent building extraction.

It is to be understood that, in order to eliminate the influence of different dimensions of the data in different channels, the new channel data of each channel can also be normalized. The normalization process may use one of linear function normalization, zero-mean normalization, and other existing normalization methods, or a combination of at least two methods.

It is to be noted that, in order to eliminate images caused by different dimensions of each channel data in the new channel data and the remote sensing image data, the new channel data can be normalized to the data range [0,255] during the normalization process.

It is to be noted that, by introducing the number of location points, the user's location situation in the target area can be reflected, so that the user's behavior can be characterized under the location point dimension or the application usage dimension. By introducing the number of location users associated with pixels, the distribution of users can be determined, which can reflect the potential activities of the user in the target area.

At block S504, a building in the target area is extracted according to the remote sensing image data and the new channel data.

In the embodiments of the present disclosure, the operation of generating new channel data is refined to determining the location data associated with the respective pixels of the remote sensing image data according to the distribution situation of the respective location points in the location data; and generate new channel data according to the statistical result by performing statistics on at least one of the number of location points and the number of location users in the location data associated with the respective pixels. The above technical solution, by introducing at least one of the number of location points and the number of location users in the location data associated with the pixel, partly characterizes the user's activities of the user in the pixel, so that the generated new channel data includes implied features associated with user's behaviors. Therefore, in the building extraction process, supplementing the remote sensing image data enriches the reference for building extraction and lays the foundation of the improvement of the accuracy of the extraction result.

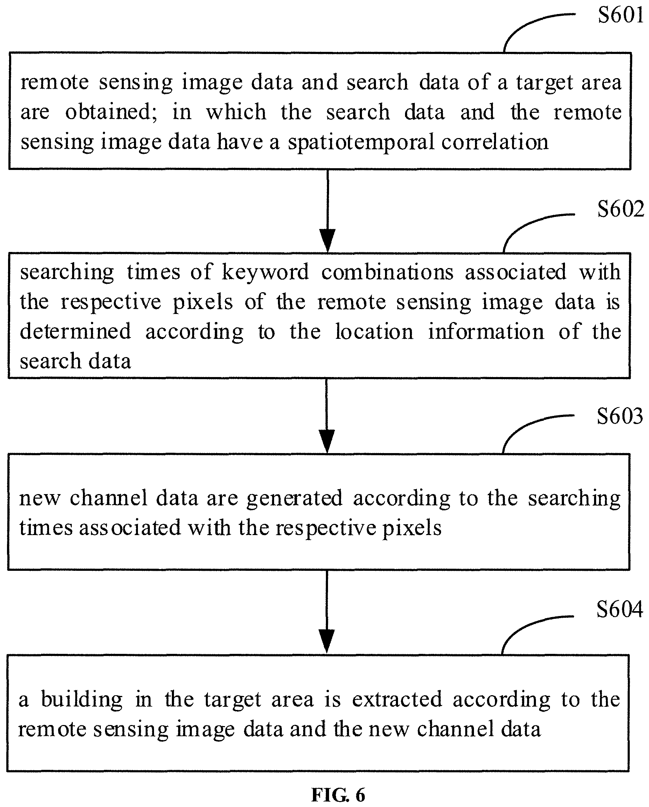

FIG. 6 is a flow chart illustrating another method for building extraction according to an exemplary embodiment. The method is optimized and improved on the basis of the technical solutions in the above embodiments.

Further, the user behavior associated data are defined to including search data; correspondingly, the operation "generating new channel data according to the user behavior associated data and the remote sensing image data" is defined to "determining searching times of keyword combinations associated with the respective pixels of the remote sensing image data according to the location information of the search data; generating new channel data based on searching times associated with the respective pixels" to improve the determination mechanism of the new channel data.

The method as illustrated in FIG. 6 includes followings.

At block S601, remote sensing image data and search data of a target area are obtained; in which the search data and the remote sensing image data have a spatiotemporal correlation.

The search data may be generated by a user in the target area using an application with a search function, so the search data may represent the search behavior of the user.

Exemplarily, the search data may be the data collected within a set historical time period before the remote sensing image data collection time, which reflects the time correlation between the location data and the remote sensing image data, and meanwhile ensures the timeliness of the location data. The set historical time period can be determined by technicians according to needs or experience, or repeatedly determined through a large number of experiments.

Exemplarily, the search data may be the data generated by a user in the target area, thereby ensuring the spatial association between the search data and the remote sensing image data, and laying a foundation for the generation of candidate new channel data.

At block S602, searching times of keyword combinations associated with the respective pixels of the remote sensing image data is determined according to the location information of the search data.

The location information of the search data is used to characterize the location information that generates the search behavior. Exemplarily, according to the location information of the search data and the location information of the respective pixels of the remote sensing image data, the search data can be mapped to the respective pixels to obtain the search data associated with the respective pixels; statistics is performed respectively on the searching times of keyword combinations in the search data associated with the respective pixels to provide data support for the subsequent generation of new channel data.

Exemplarily, the keyword combinations can be determined by searching a pre-set search lexicon. Optionally, according to the candidate word combination in the search data, a pre-set search lexicon can be found, and the keyword combinations in the search data can be determined according to the matching situation of each phrase and candidate word combinations in the search lexicon, and the number of searches for the determined keyword combinations can be counted. Specifically, when a phrase in the search lexicon matches a candidate word combination, the candidate word combination is determined to be a keyword combination; otherwise, the candidate word combination is determined to be an unrelated word combination.

At block S603, new channel data are generated according to the searching times associated with the respective pixels.

Exemplarily, according to the order of each pixel in the remote sensing image data, the searching times associated with the respective pixels may be combined to generate new channel data under the search dimension.

At block S604, a building in the target area is extracted according to the remote sensing image data and the new channel data.

In the embodiments of the present disclosure, the operation of generating new channel data is refined to determining the searching times of keyword combinations associated with the respective pixels of the remote sensing image data according to the location information of the search data; generate new channel data according to the number of searches associated with the respective pixels. The above technical solution, by introducing the searching times of keyword combinations in the search data associated with the pixel to characterize the search behavior of the user in the pixel, so that the generated new channel data includes implied features associated with the user search behavior. Therefore, in the building extraction process, supplementing the remote sensing image data enriches the reference for building extraction and lays the foundation of the improvement of the accuracy of the extraction result.

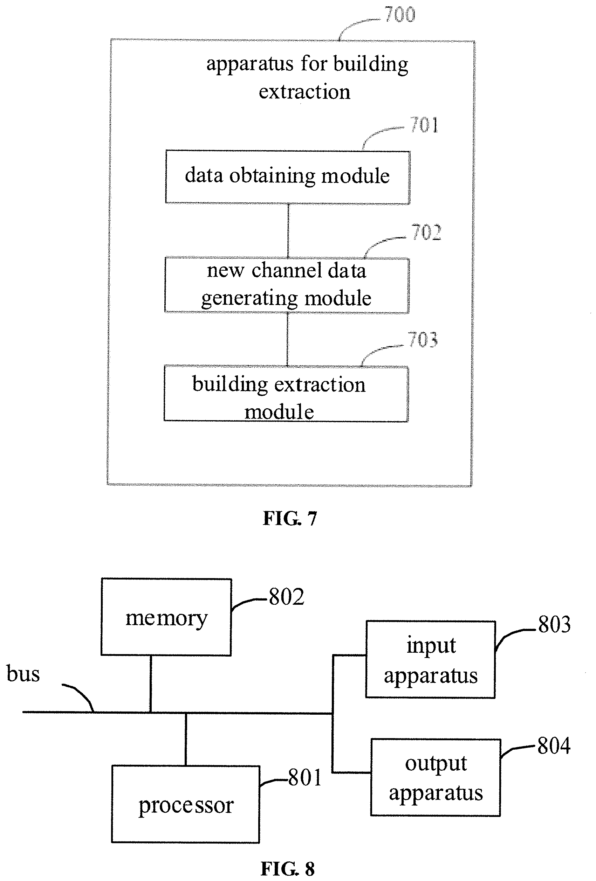

FIG. 7 is a schematic diagram illustrating an apparatus for building extraction according to an exemplary embodiment. The building extraction apparatus 700 includes a data obtaining module 701, a new channel data generation module 702, and a building extraction module 703.

The data obtaining module 701 is configured to obtain remote sensing image data and user behavior associated data of a target area, wherein the user behavior associated data and the remote sensing image data have a spatiotemporal correlation; the new channel data generating module 702 is configured to generate new channel data according to the user behavior associated data and the remote sensing image data; and the building exaction module 703 is configured to extract a building in the target area according to the remote sensing image data and the new channel data.

In the embodiments of the present disclosure, remote sensing image data and user behavior associated data in the target area are obtained by a data obtaining module; in which the user behavior associated data and the remote sensing image data have a spatiotemporal correlation; new channel data are generated according to the user behavior associated data and the remote sensing image data by a new channel data generating module; and a building in the target area may be extracted according to the remote sensing image data and the new channel data by a building extraction module. The embodiments of the present disclosure introduce new channel data generated by the user behavior associated data and the remote sensing image data to characterize the user's activity in different locations in the target area, and use the new channel data as supplementary data for the remote sensing image data, which enriches the data reference in the process of building extraction, thereby improving the accuracy of the building extraction result. At the same time, the new channel data can also make up for the influence on the building extraction result caused by the poor quality of the remote sensing image data due to the collection environment and other factors, thereby improving the stability of the building extraction result and the generality of the building extraction method.

Further, the new channel data generating module 702 includes a pixel mapping unit. The pixel mapping unit is configured to map the user behavior associated data to pixels of the remote sensing image data according to location information, and generate the new channel data according to the user behavior associated data associated with the respective pixels.

Further, the user behavior associated data include at least one of points of interest (POI) data, location data, and search data.

Further, when the user behavior associated data include POI data, the pixel mapping unit includes a neighboring POI determining subunit and a new channel data generating subunit. The neighboring POI determining subunit is configured to determine neighboring POIs of each the respective pixels in the remote sensing image data according to the location information of each respective candidate POIs in the POI data; and the new channel data generating subunit is configured to generate the new channel data according to POI data of the neighboring POIs.

Further, the new channel data generating subunit includes a POI vector generating slave unit and a POI statistical slave unit. The POI vector generating slave unit is configured to, for each pixel, generate a POI topic vector according to text data of the neighboring POIs, and generate the new channel data according to POI topic vectors of respective pixels.

Further, when the user behavior associated data include location data, the pixel mapping unit includes a resident category determining slave unit and a new channel data generating slave unit. The resident category determining slave unit is configured to determine resident categories of location points associated with the respective pixels according to a distribution condition of the respective location points in the location data, wherein, the resident categories comprise a permanent category and a non-permanent category; and the new channel data generating slave unit is configured to generate the new channel data according to the resident categories associated with the respective pixels.

Further, the new channel data generating slave unit includes a resident category statistical sub-slave unit. The resident category statistical sub-slave unit is configured to, perform statistics on the location points associated with the respective pixels according to the resident categories, and generate the new channel data according to a statistical result.

Further, when user behavior associated data include location data, the pixel mapping unit includes a pixel-associated location data determining slave unit and a location data statistical slave unit. The pixel-associated location data determining slave unit is configured to determine location data associated with the respective pixels of the remote sensing image data according to the distribution of each location point in the location data; and the location data statistical slave unit is configured to perform statistics on at least one of the number of location points and the number of location users in the location data associated with the respective pixels, and generating the new channel data according to a statistical result.

Further, when user behavior associated data include search data, the pixel mapping unit includes a searching times determining slave unit and a search category determining slave unit. The searching times determining slave unit is configured to determine a searching time of keyword combinations associated with the respective pixels of the remote sensing image data according to the location information of the search data; and the search category determining slave unit is configured to generate the new channel data according to the searching times associated with the respective pixels.

Further, the building extraction module 703 includes a building exaction unit. The building exaction unit is configured to input the remote sensing image data and the new channel data to a pre-trained building extraction model, and extract the building in the target area.

The above apparatus for building extraction can execute the method for building extraction provided by any embodiment of the present disclosure, and has the corresponding functional modules and beneficial effects for executing the building extraction method.

It should be understood that the term "image" in the present disclosure represents viewdata such as image, picture or video.

According to the embodiments of the present disclosure, the present disclosure also provides an electronic device and a readable-storage medium.

FIG. 8 is a block diagram illustrating an electronic device for implementing the building extraction method in embodiments of the present disclosure. Electronic devices are intended to represent various forms of digital computers, such as laptop computers, desktop computers, work tables, personal digital assistants, servers, blade servers, mainframe computers, and other suitable computers. Electronic devices can also represent various forms of mobile apparatus, such as personal digital processors, cellular phones, smart phones, wearable devices, and other similar computing apparatus. The components illustrated herein, their connections and relationships, and their functions are merely examples, and are not intended to limit the implementation of the disclosure described and/or required herein.

As illustrated in FIG. 8, the electronic device includes one or more processors 801, a memory 802, and interfaces for connecting various components, including high-speed interfaces and low-speed interfaces. The various components are connected to each other by different buses, and can be installed on a common motherboard or installed in other ways as needed. The processor may process instructions executed in the electronic device, including instructions stored in or on the memory to display graphical information of the GUI on an external input/output apparatus (such as a display device coupled to an interface). In other embodiments, when necessary, a plurality of processors and/or a plurality of buses can be used with a plurality of memories and a plurality of memories. Similarly, a plurality of electronic devices can be connected, and each device provides some necessary operations (for example, as a server array, a group of blade servers, or a multi-processor system). In FIG. 8, a processor 801 is taken as an example.

The memory 802 is a non-transitory computer-readable storage medium provided by the disclosure. The memory stores instructions that can be executed by at least one processor, so that at least one processor executes the building extraction method provided by the present disclosure. The non-transitory computer-readable storage medium of the present disclosure has computer instructions stored thereon, in which the computer instructions are used to make a computer execute the building extraction method provided by the present disclosure.

As a non-transitory computer-readable storage medium, the memory 802 can be used to store non-transitory software programs, non-transitory computer-executable programs and modules, such as program instructions/modules corresponding to the building extraction method in the embodiments of the present disclosure (for example, the data obtaining module 701, the new channel data generating module 702, and the building extraction module 703 illustrated in FIG. 7). The processor 801 executes various functional applications and data processing of the server, that is, implements the building extraction method in the above method embodiments, by running non-transitory software programs, instructions, and modules stored in the memory 802.

The memory 802 may include a storage program area and a storage data area, in which the storage program area may store an operating system and at least an application program required by one function; and the storage data area may store data created by the use of an electronic device that implements the building extraction method. In addition, the memory 802 may include a high-speed random access memory, and may also include a non-transitory memory, such as at least one magnetic disk storage device, a flash memory device, or other non-transitory solid-state storage devices. In some embodiments, the memory 802 may optionally include a memory remotely provided compared with the processor 801, and these remote memories may be connected to an electronic device that implements the building extraction method through network. Examples of the above networks include, but are not limited to, the Internet, corporate Intranets, local area networks, mobile communication networks, and combinations thereof.

The electronic device implementing the building extraction method may further include: an input apparatus 803 and an output apparatus 804. The processor 801, the memory 802, the input apparatus 803, and the output apparatus 804 may be connected by a bus or other methods. In FIG. 8, the connection by a bus is taken as an example.

The input apparatus 803 can receive input digital or character information, and generate key signal input related to the user settings and function control of the electronic device that implements the building extraction method, such as touch screens, keypads, mouses, trackpads, touchpads, and instructing arms, one or more mouse buttons, trackballs, joysticks and other input apparatus. The output apparatus 804 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and technologies described herein can be implemented in digital electronic circuit systems, integrated circuit systems, specific application-specific integrated circuit (ASIC), computer hardware, firmware, software, and/or combinations thereof. These various embodiments may be implemented in one or more computer programs, in which the one or more computer programs may be executed and/or interpreted on a programmable system including at least one programmable processor, in which the programmable processor may be a dedicated or general purpose programmable processor that can receive data and instructions from the storage system, at least one input apparatus, and at least one output apparatus, and transmit the data and instructions to the storage system, at least one input apparatus, and at least one output apparatus.

These computational procedures (also called programs, software, software applications, or codes) include machine instructions of a programmable processor, and can be implemented using high-level procedures and/or object-oriented programming languages, and/or assembly/machine language to implement computational procedures. As used herein, the terms "machine-readable medium" and "computer-readable medium" refer to any computer program product, device, and/or apparatus used to provide machine instructions and/or data to a programmable processor (for example, magnetic disks, optical disks, memories, programmable logic devices (PLD)), including machine-readable media that receive machine instructions as machine-readable signals. The term "machine-readable signal" refers to any signal used to provide machine instructions and/or data to a programmable processor.

In order to provide interaction with the user, the systems and technologies described herein can be implemented on a computer and the computer includes a display apparatus for displaying information to the user (for example, a CRT (cathode ray tube) or an LCD (liquid crystal display) monitor)); and a keyboard and a pointing apparatus (for example, a mouse or a trackball) through which the user can provide input to the computer. Other types of apparatus can also be used to provide interaction with the user; for example, the feedback provided to the user can be any form of sensory feedback (for example, visual feedback, auditory feedback, or tactile feedback); and can be in any form (including acoustic input, voice input, or tactile input) to receive input from the user.

The systems and technologies described herein can be implemented in a computing system that includes back-end components (for example, as a data server), or a computing system that includes middleware components (for example, an application server), or a computing system that includes front-end components (for example, a user computer with a graphical user interface or web browser through which the user can interact with the implementation of the systems and technologies described herein), or a computing system that includes any combination of the back-end components, middleware components, or front-end components. The components of the system can be connected to each other through any form or medium of digital data communication (for example, a communication network). Examples of communication networks include: local area networks (LAN), wide area networks (WAN), the Internet, and blockchain networks.

The computer system may include a client and a server. The client and server are generally far away from each other and usually interact through a communication network. The relationship between the client and the server is generated by computer programs that run on the corresponding computer and have a client-server relationship with each other. The server can be a cloud server, also known as a cloud computing server or a cloud host, which is a host product in the cloud computing service system to solve the problem of difficult management and weak business scalability of traditional physical hosts and VPS services.

In technical solutions of the embodiments of the present disclosure, new channel data generated by the user behavior associated data and the remote sensing image data are introduced to characterize the user's activity in different locations in the target area, and the new channel data are determined to be supplementary data for remote sensing image data, which enriches the data reference in the process of building extraction, thereby improving the accuracy of the building extraction result. At the same time, the new channel data can also make up for the influence on the building extraction result caused by the poor quality of the remote sensing image data due to the collection environment and other factors, thereby improving the stability of the building extraction result and the generality of the building extraction method.

It is to be understood that the various forms of processes illustrated above can be used to reordering, adding or deleting steps. For example, the blocks described in the present disclosure can be executed in parallel, sequentially, or in a different order, as long as the desired result of the technical solution disclosed in the present disclosure can be achieved, this is not limited herein.

## Claims

1. A method for building exaction, comprising:
obtaining (S101) remote sensing image data and user behavior associated data of a target area, wherein the user behavior associated data and the remote sensing image data have a spatiotemporal correlation;
generating (S102) new channel data according to the user behavior associated data and the remote sensing image data; and
extracting (S103) a building in the target area according to the remote sensing image data and the new channel data.

2. The method of claim 1, wherein generating (S102) the new channel data according to the user behavior associated data and the remote sensing image data comprises:
mapping the user behavior associated data to pixels of the remote sensing image data according to location information, and generating the new channel data according to the user behavior associated data associated with the respective pixels.

3. The method of claim 1 or 2, wherein the user behavior associated data comprise at least one of points of interest (POI) data, location data, and search data.

4. The method of claim 3, wherein when the user behavior associated data comprise the POI data, mapping the user behavior associated data to pixels of the remote sensing image data according to location information, and generating the new channel data according to the user behavior associated data associated with the respective pixels comprise:
determining (S302) neighboring POIs of the respective pixels in the remote sensing image data according to location information of respective candidate POIs in the POI data; and
generating (S303) the new channel data according to POI data of the neighboring POIs.

5. The method of claim 4, wherein generating the new channel data according to POI data of the neighboring POIs comprises:
for each pixel, generating a POI topic vector according to text data of the neighboring POIs, and generating the new channel data according to POI topic vectors of respective pixels; or,
performing statistics on the neighboring POIs of the respective pixels, and generating the new channel data according to a statistical result.

6. The method of one of claims 3 to 5, wherein when the user behavior associated data comprise the location data, mapping the user behavior associated data to pixels of the remote sensing image data according to location information, and generating the new channel data according to the user behavior associated data associated with the respective pixels comprises:
determining (S402) resident categories of location points associated with the respective pixels according to a distribution condition of the respective location points in the location data, wherein, the resident categories comprise a permanent category and a non-permanent category; and
generating (S403) the new channel data according to the resident categories associated with the respective pixels.

7. The method of claim 6, wherein generating the new channel data according to the resident categories associated with the respective pixels comprises:
performing statistics on the location points associated with the respective pixels according to the resident categories, and generating the new channel data according to a statistical result.

8. The method of one of claims 3 to 7, wherein when the user behavior associated data comprise the location data, mapping the user behavior associated data to pixels of the remote sensing image data according to location information, and generating the new channel data according to the user behavior associated data associated with the respective pixels comprise:
determining (S502) location data associated with the respective pixels of the remote sensing image data according to the distribution of each location point in the location data;
and
performing (S503) statistics on at least one of the number of location points and the number of location users in the location data associated with the respective pixels, and
generating the new channel data according to a statistical result.

9. The method of one of claims 3 to 8, wherein when the user behavior associated data comprise the search data, mapping the user behavior associated data to pixels of the remote sensing image data according to location information, and generating the new channel data according to the user behavior associated data associated with the respective pixels comprises:
determining (S602) a searching time of keyword combinations associated with the respective pixels of the remote sensing image data according to the location information of the search data; and
generating (S603) the new channel data according to searching times associated with the respective pixels.

10. The method of any one of claims 1-9, wherein extracting (S 103) the building in the target area according to the remote sensing image data and the new channel data comprises:
inputting (S204) the remote sensing image data and the new channel data to a pre-trained building extraction model, and extracting the building in the target area.

11. A building exaction apparatus, comprising:
a data obtaining module (701), configured to obtain remote sensing image data and user behavior associated data of a target area, wherein the user behavior associated data and the remote sensing image data have a spatiotemporal correlation;
a new channel data generating module (702), configured to generate new channel data according to the user behavior associated data and the remote sensing image data; and
a building exaction module (703), configured to extract a building in the target area according to the remote sensing image data and the new channel data.

12. The apparatus of claim 11, wherein the new channel data generating module (702) comprises:
a pixel mapping unit, configured to map the user behavior associated data to pixels of the remote sensing image data according to location information, and generate the new channel data according to the user behavior associated data associated with the respective pixels.

13. The apparatus of claim 12, wherein the user behavior associated data comprise at least one of points of interest (POI) data, location data, and search data, and when the user behavior associated data comprise the POI data, the pixel mapping unit comprises:
a neighboring POI determining subunit, configured to determine neighboring POls of each the respective pixels in the remote sensing image data according to the location information of each respective candidate POIs in the POI data; and
a new channel data generating subunit, configured to generate the new channel data according to POI data of the neighboring POIs.

14. An electrical device, comprising:
at least a processor, and
a memory connected with at least one processor communication; wherein,
the memory configured to store instructions executable by at least one processor, and
when the instructions are executed by at least one processor, the at least one processor are configured to execute the method of any one of claims 1-10.

15. A non-transitory computer-readable storage medium having computer instructions stored thereon, wherein the computer instructions are configured to execute the method of any one of claims 1-10.
